Europäisches Patentamt

European Patent Office

Office européen des brevets

(11) Numéro de publication : **0 093 054**
**B1**

(12) **FASCICULE DE BREVET EUROPÉEN**

(45) Date de publication du fascicule du brevet :
15.04.87

(51) Int. Cl.⁴ : **H 04 Q    1/14**

(21) Numéro de dépôt : **83400799.9**

(22) Date de dépôt : **22.04.83**

(54) **Procédé de réalisation de connexions d'un répartiteur téléphonique.**

(30) Priorité : **22.04.82 FR 8206969**

(43) Date de publication de la demande :
**02.11.83 Bulletin 83/44**

(45) Mention de la délivrance du brevet :
**15.04.87 Bulletin 87/16**

(84) Etats contractants désignés :
**DE GB SE**

(56) Documents cités :
**EP-A- 0 042 314
DE-A- 2 315 485
FR-A- 2 229 177
FR-A- 2 317 843**

(73) Titulaire : **BOGA S.A.**
**39 à 45 quai Bérigny**
**F-76400 Fecamp (FR)**

(72) Inventeur : **Lacombe, Jean-Jacques**
**15 Avenue Gambetta**
**F-76400 Fecamp (FR)**

(74) Mandataire : **Arnaud, Jean Pierre Alfred**
**Cabinet Arnaud 94 rue Saint-Lazare**
**F-75009 Paris (FR)**

EP 0 093 054 B1

Jouve, 18, rue St-Denis, 75001 Paris, France

## Description

La présente invention concerne la réalisation des connexions dans les répartiteurs téléphoniques.

Un répartiteur téléphonique constitue l'organe de couplage des câbles d'un réseau de distribution téléphonique et d'un autocommutateur auquel sont rattachés les différents abonnés. Plus précisément, les lignes téléphoniques, sous forme de paires, sont rassemblées sous forme de câbles qui aboutissent, dans un répartiteur, à des premiers blocs de connecteurs appelés « têtes de câble » dans la technique. De même, l'autocommutateur est relié à d'autres blocs de connecteurs appelés « réglettes ». Le raccordement d'un abonné consiste dans la connexion du point auquel aboutit la paire téléphonique correspondant à la ligne de l'abonné, dans une tête de câble, au point de connexion de la ligne provenant de l'équipement attribué à l'abonné dans l'autocommutateur, dans la réglette. Les connexions sont matériellement réalisées par un ensemble de plusieurs fils qui relie directement les deux points et qui est appelé « jarretière » dans la technique.

La demande de brevet européen n° EP-A-74 898 publiée le 23 mars 1983, c'est-à-dire après la date de priorité de la présente demande et appartenant ainsi à l'état de la technique visé à l'article 54 (3) de la CBE, décrit des colonnes destinées à la réalisation de répartiteurs téléphoniques, ainsi qu'un procédé avantageux de réalisation des connexions dans un tel répartiteur. Celui-ci comporte plusieurs colonnes ayant chacune des anneaux formant une « cheminée » de passage des jarretières et des anneaux de caniveau, placés avantageusement au pied des colonnes. Chaque colonne comprend plusieurs blocs de connecteurs qui peuvent être uniquement des têtes de câble, uniquement des réglettes ou à la fois des têtes de câble et des réglettes. Selon ce procédé, lorsque les points de connexions de la tête de câble et de la réglette qui doivent être reliés se trouvent dans la même colonne, la jarretière est disposée uniquement dans la cheminée de cette colonne. Lorsque la tête de câble et la réglette appartiennent à des colonnes différentes, la jarretière descend dans la cheminée de la première colonne, passe dans les anneaux de caniveau de cette colonne et de toutes les colonnes suivantes jusqu'à la colonne contenant l'autre bloc de connecteurs et remonte dans la cheminée de cette dernière colonne. La disposition d'une jarretière ne peut donc être réalisée que d'une seule manière, contrairement aux autres répartiteurs téléphoniques dans lesquels le câbleur chargé de la pose des jarretières peut choisir plusieurs trajets.

L'invention s'applique essentiellement aux répartiteurs de ce type car, lorsque le point de départ et le point d'arrivée d'une jarretière ont été déterminés, d'une part le trajet de la jarretière est lui aussi déterminé et d'autre part toutes les jarretières peuvent être placées et enlevées dans un ordre quelconque car les jarretières ne se croisent jamais.

Ces caractéristiques avantageuses de ce type de répartiteur permettent alors une optimisation de la mise en œuvre de ce répartiteur et plus précisément de la sélection des points de raccordement.

Plus précisément, l'invention concerne un procédé de réalisation de connexions dans un répartiteur téléphonique constitué de colonnes portant des blocs de connecteurs et ayant chacune une cheminée de passage de jarretières et au moins un anneau de caniveau, des anneaux de caniveau des différentes colonnes étant juxtaposés et formant un passage transversal aux colonnes, les connecteurs portés par les colonnes formant deux ensembles, chaque connexion devant être réalisée entre un point de connexion du premier ensemble et un point de connexion du second ensemble, le procédé comprenant :

la détermination de coordonnées d'un premier point d'un premier ensemble de connecteurs et la fixation d'une première extrémité d'une jarretière à ce premier point,

la consultation d'un fichier et la détermination dans celui-ci, d'après les coordonnées du premier point du premier ensemble de connecteurs et de premières données associées à ce point, d'un sous-ensemble de seconds points non connectés du second ensemble de connecteurs,

la sélection d'un second point du sous-ensemble par détermination du point pour lequel une fonction paramétrique des points du sous-ensemble a une valeur optimale, les paramètres de cette fonction ne dépendant que des caractéristiques de constitution du répartiteur, puis

lorsque le second point se trouve dans une même colonne que le premier point, la disposition de la jarretière dont la première extrémité a été fixée dans la cheminée de cette même colonne, jusqu'au second point, et la fixation de la seconde extrémité de la jarretière au second point, ou

lorsque le second point se trouve dans une autre colonne que celle du premier point, la disposition de la jarretière dont la première extrémité a été fixée dans la cheminée de la colonne comprenant le premier point, jusqu'à l'anneau de caniveau de cette colonne, la disposition de la jarretière dans des anneaux de caniveau jusqu'à l'anneau de caniveau de la colonne comprenant le second point, la disposition de la jarretière dans la cheminée de cette colonne du second point, et la fixation de la seconde extrémité de la jarretière au second point.

Le premier ensemble de connecteurs comprend avantageusement plusieurs blocs de points de connexion, et le second ensemble de connecteurs comprend plusieurs blocs de points de connexion, et les coordonnées d'un point comprennent l'adresse du bloc correspondant et les coordonnées du point dans ce bloc.

Il est avantageux que les données associées au premier point soient choisies dans le groupe qui comprend des données de trafic probable assuré par le point considéré, des données représentatives des services particuliers qui doivent être assurés à la ligne téléphonique à connecter, et des données représentatives des caractéristiques particulières de l'autocommutateur associé au répartiteur.

Il est avantageux que le second ensemble de connecteurs comporte plusieurs blocs de connecteurs, et que la fonction paramétrique dépende d'une première fonction qui est optimale lorsque les taux d'occupation des points de connexion des différents blocs de connecteurs d'un même type sont égaux et d'une seconde fonction qui est optimale lorsque la longueur du trajet que doit suivre l'organe de connexion des deux points est minimale.

Le procédé comprend en outre avantageusement la remise à jour du fichier par marquage du second point sélectionné afin que celui-ci ne puisse pas être sélectionné à nouveau.

Le procédé comprend avantageusement la comparaison de la valeur de la fonction paramétrique à une valeur de référence et, lorsque la fonction présente une relation prédéterminée avec la valeur de référence, la mise en œuvre à nouveau du procédé avec incorporation au sous-ensemble de points déjà connectés afin qu'un second point déjà connecté soit sélectionné, et la mise en œuvre à nouveau du procédé pour le premier point correspondant au second point déjà connecté et sélectionné.

Le procédé comprend aussi avantageusement la traduction des coordonnées du premier point de connexion en un numéro d'abonné et inversement, et la traduction des coordonnées du second point de connexion en un numéro d'équipement d'autocommutateur et inversement.

L'invention met en œuvre un appareil de sélection de points de connexion dans un répartiteur téléphonique, destiné à la mise en œuvre d'un procédé tel que ci-dessus décrit. Un tel appareil comprend un dispositif d'introduction de données, un organe de traitement, un fichier contenant les seconds points sélectionnés, une mémoire contenant les caractéristiques de constitution du répartiteur, et un dispositif d'affichage.

Dans une variante, l'appareil comporte avantageusement deux dispositifs d'introduction de données et deux dispositifs d'affichage, l'un des dispositifs d'introduction de données étant utilisé pour la validation de la modification des données du fichier lorsqu'une opération réelle de connexion a effectivement été exécutée.

Le procédé de sélection selon l'invention permettent une véritable gestion du répartiteur téléphonique, et notamment la conservation en mémoire de l'état des connexions réalisées et des points libres. Jusqu'à présent, une telle gestion était impossible étant donné que les câbleurs disposaient les jarretières d'une manière très empirique. En particulier, les jarretières se croisaient et la pose ou l'enlèvement de certaines jarretières était pratiquement impossible.

L'invention concerne donc un progrès considérable, par rapport à la technique actuelle, et elle permet de tenir compte de toutes les contraintes externes ou internes fixées par les règlements ou les organisations de pays différents et par la réalisation matérielle différente du répartiteur.

On considère maintenant plus en détail la mise en œuvre de l'invention. Dans l'exemple considéré, le répartiteur téléphonique est du type décrit dans la demande précitée de brevet européen n° EP-A-74898. Il suffit de noter, pour la compréhension de l'invention, qu'un tel répartiteur comprend plusieurs colonnes qui portent des premiers anneaux formant une cheminée et des seconds anneaux, placés au pied des colonnes, de manière que ces anneaux des diverses colonnes juxtaposées forment un caniveau. Chaque colonne porte un certain nombre de blocs de connecteurs qui peuvent être des têtes de câble ou des réglettes. Bien entendu, d'autres appareillages spécifiques peuvent être montés sur les colonnes, mais ils n'ont aucune incidence sur la compréhension de l'invention.

La caractéristique essentielle de ce répartiteur est que, lorsqu'un premier point de connexion d'un premier ensemble de connecteurs, par exemple des têtes de câble, et un second point d'un second ensemble de connexions, par exemple des réglettes, ont été sélectionnés, le câbleur ne peut disposer la jarretière correspondante que suivant un trajet déterminé. Plus précisément, le câbleur place une extrémité de la jarretière au premier point qui lui est indiqué, et dispose la jarretière dans la cheminée correspondante, soit du côté de la réglette lorsque celle-ci est comprise dans la même colonne, soit du côté du caniveau de pied. Si la réglette se trouve dans une autre colonne, il fait passer la jarretière dans le caniveau de pied jusqu'à ce qu'elle atteigne la colonne ayant le second point de connexion. A ce moment, il fait remonter la jarretière dans les anneaux de cheminée de cette dernière colonne, jusqu'au point de connexion de la réglette correspondante.

Ainsi, lorsque le câbleur indique qu'il a effectivement exécuté une connexion, l'appareil de sélection selon l'invention sait automatiquement où se trouve la jarretière correspondante.

Le premier point auquel une jarretière doit être connectée est en général fixé suivant des critères qui ne concernent en rien la gestion du répartiteur lui-même. En général, ces critères sont essentiellement géographiques. En effet, lorsqu'un abonné demande son raccordement au réseau téléphonique, les services techniques déterminent quelle est la paire la plus proche pour effectuer ce raccordement. Cette paire est déjà reliée à un point particulier de connexion d'une tête de câble du répartiteur. La sélection de la paire la plus proche du domicile de l'abonné par le service technique provoque donc automatiquement la sélection du premier point de connexion d'une tête de câble. Cependant, il peut arriver que plusieurs paires conviennent également bien aux services techniques, mais elles sont en général reliées à des points de connexion très voisins sur une même tête de câble si bien qu'elles n'élargissent pas notablement les possibilités de gestion du répartiteur lui-même. Cependant, lorsqu'une telle possibilité existe, elle peut aussi être effectivement mise en œuvre selon l'invention pour faciliter la gestion du répartiteur.

Lorsque le premier point a été sélectionné, des premières données lui sont associées. En effet, l'abonné a pu demander des services particuliers (télétaxe, « Telic », facturation automatique, ...). Ces données associées doivent être prises en compte immédiatement car elles peuvent limiter le nombre d'équipements de l'autocommutateur associé auxquels la ligne peut être reliée. En conséquence, seuls les points de connexion des réglettes qui sont reliés à des équipements de l'autocommutateur ayant les caractéristiques voulues peuvent être impliqués dans la sélection du second point. Lorsque l'autocommutateur n'est pas saturé, il reste alors plusieurs seconds points qui peuvent être sélectionnés. Ils forment un sous-ensemble de seconds points libres ou non connectés.

Le procédé selon l'invention comprend ensuite la sélection de l'un des seconds points de ce sous-ensemble. Cette opération de sélection constitue la partie essentielle de la gestion du répartiteur. Elle est exécutée par mise en œuvre de différents critères relatifs au répartiteur lui-même. Ces différents critères peuvent être représentés par une fonction paramétrique des seconds points du sous-ensemble. Cette fonction paramétrique est avantageusement elle-même une combinaison d'au moins deux fonctions dont l'une est relative au taux d'occupation des points de connexion des réglettes et dont l'autre est relative au trajet des jarretières elles-mêmes.

Plus précisément, les réglettes sont en général d'au moins deux types. Par exemple, certaines réglettes peuvent être affectées à des lignes à trafic important. D'autres réglettes peuvent être au contraire raccordées aux lignes d'abonnés à faible trafic, notamment les abonnés résidentiels. Il est souhaitable, pour une bonne gestion du répartiteur, que les points de connexion des différentes réglettes d'un type aient un taux d'occupation à peu près constant. Ainsi, il n'est pas souhaitable que tous les points de connexion d'une réglette soient utilisés alors que d'autres réglettes n'ont qu'un très petit nombre de points de connexion utilisés. A cet effet, l'opération de sélection met avantageusement en œuvre une fonction du taux d'occupation. Ainsi, l'appareil utilisé calcule le taux d'occupation de chacune des réglettes du type considéré. Il détermine alors quelles sont celles dont le taux d'occupation est le plus faible. Il peut soit sélectionner la réglette ayant le plus faible taux d'occupation soit simplement éliminer de la sélection les réglettes dont les taux d'occupation sont les plus élevés.

Une seconde fonction avantageuse est l'optimisation de la longueur du trajet des jarretières. Bien que le coût de l'organe de connexion constituant les jarretières ne soit pas très élevé, il est cependant souhaitable de réduire la longueur des jarretières dans la mesure du possible car cette réduction s'accompagne d'une réduction de l'encombrement des cheminées et des caniveaux. En outre, cette réduction de longueur est souhaitable car le travail du câbleur est facilité et est donc accéléré. L'appareil calcule donc avantageusement la longueur du trajet que doit parcourir la jarretière pour tous les points qui peuvent être sélectionnés. Ce calcul est possible puisque, lorsque les points de départ et d'arrivée sont fixés, le trajet est entièrement déterminé. Cette seconde fonction permet la détermination des trajets de plus faible longueur.

Le procédé peut alors assurer la sélection par pondération des deux fonctions principales. Par exemple, si le trajet le plus court ne peut être obtenu que par connexion à une réglette ayant un taux d'occupation très élevé, il est souhaitable qu'un trajet un peu plus long soit sélectionné s'il aboutit à une réglette dont le taux d'occupation est insuffisant. Par contre, si cette modification nécessite un trop grand allongement de la jarretière, l'appareil détermine quelle solution est préférable et détermine un point d'après la fonction paramétrique globale. Cette fonction paramétrique peut varier suivant divers critères. Par exemple, l'obtention d'un faible taux d'occupation peut être une considération prépondérante lorsqu'il s'agit de réglettes de raccordement de lignes à fort trafic. Au contraire, la considération de trajet minimal peut être prépondérante dans le cas de réglettes de raccordement de lignes d'abonnés résidentiels.

On vient de décrire un exemple de fonction paramétrique, mais il faut noter que ces fonctions peuvent beaucoup varier en fonction des critères locaux ou de règlements particuliers. Par exemple, lors du remodelage d'une partie du répartiteur ou d'une extension prochaine prévue, il est souhaitable que, en prévision, le programme décharge les réglettes qui se trouvent par exemple à une extrémité du répartiteur ou au contraire les charge.

Toutes ces possibilités donnent une très grande souplesse à la gestion du répartiteur téléphonique indiqué précédemment.

Bien entendu, cette gestion nécessite que l'appareil qui la met en œuvre soit au courant de l'état du répartiteur. Il doit donc comprendre une mémoire qui est régulièrement remise à jour. Plus précisément, le fichier des points qui peuvent être sélectionnés doit être tenu à jour. A cet effet, il est souhaitable que l'appareil comporte un dispositif d'introduction de données qui est à la disposition du câbleur et qui permet à celui-ci d'indiquer à l'appareil qu'il a réalisé la connexion demandée. Par exemple, à un premier poste, un opérateur peut introduire les données qui permettent à l'appareil de déterminer quel est le second point optimal de connexion. Le résultat est indiqué non seulement à l'opérateur mais aussi au câbleur du répartiteur, qui, lorsqu'il reçoit les adresses du premier et du second point à raccorder, place une jarretière correspondante. Dès qu'il a exécuté l'opération, il l'indique à l'appareil qui valide alors la remise à jour de son fichier. L'opérateur peut passer alors à un autre raccordement.

Il peut arriver que l'appareil détermine que la fonction paramétrique d'optimisation a une valeur trop faible. Par exemple, l'appareil peut déterminer que la longueur d'une jarretière doit être très grande, et doit par exemple être montée entre une tête de câble et une réglette séparées par 10 ou 20 colonnes. Dans ce cas, il est souhaitable que cette connexion ne soit pas effectivement réalisée.

L'appareil peut alors remettre en question les connexions déjà réalisées. A cet effet, il peut sélectionner un sous-ensemble comprenant notamment des points déjà connectés et peut déterminer si l'utilisation de ces points permettrait une meilleure optimisation de la fonction paramétrique pour le premier point de connexion considéré, c'est-à-dire pour le raccordement à réaliser. S'il détermine qu'un second point d'une réglette permet une optimisation meilleure, il doit alors trouver, parmi le sous-ensemble des seconds points libres, un second point de connexion convenant au premier point qui devrait être déconnecté. S'il détermine qu'une telle opération permet une meilleure optimisation des connexions, il peut alors commander la suppression de la jarretière considérée et la pose de deux nouvelles jarretières. Par exemple, ces opérations sont avantageusement effectuées par l'intermédiaire de l'appareillage qui permet l'échange d'informations entre l'opérateur et le câbleur et la validation des données.

Bien entendu, cette dernière caractéristique ne peut être utilisée que dans le cas d'un autocommutateur électronique qui permet un changement d'équipement dans l'autocommutateur sans que l'abonné perde son numéro. Une opération de changement d'équipement doit donc aussi être effectuée dans l'autocommutateur associé.

Dans la description qui précède, on a considéré les points de connexion comme définis par des coordonnées. La réalité est en fait plus compliquée car le raccordement réalisé est identifié de manières très différentes. La ligne de l'abonné est identifiée par un premier numéro. Les coordonnées du premier point de connexion et celles du second point de connexion sont repérées par rapport aux têtes de câble et aux réglettes, et par leur position dans chaque tête de câble et chaque réglette. Enfin, au niveau de l'autocommutateur, le raccordement est représenté par un numéro d'équipement de l'autocommutateur. Il est donc souhaitable que l'appareil assure la traduction des diverses données. Par exemple, lorsque l'opérateur désigne le premier point de la tête de câble par le numéro d'abonné, il faut que le câbleur dispose du numéro de la tête de câble et du numéro du point de connexion dans cette tête de câble. De même, un numéro d'équipement de l'autocommutateur qui peut être introduit par l'opérateur doit apparaître au câbleur sous forme du numéro de la réglette et de la coordonnée du point de connexion dans cette réglette. Toutes ces opérations de traduction sont avantageusement réalisées de manière classique dans l'appareil destiné à la mise en œuvre du procédé selon l'invention.

L'appareil mis en œuvre par l'invention n'est pas représenté car il comprend des éléments bien connus que les hommes du métier savent facilement assembler les uns aux autres. Il s'agit avantageusement d'un appareil comprenant un ordinateur, ayant des mémoires classiques ainsi que des mémoires destinées à contenir les données associées aux lignes d'abonnés, les données associées à l'autocommutateur et le fichier d'état des points de connexion des réglettes. Il est relié à des dispositifs d'introduction de données et à des dispositifs de visualisation bien connus des hommes du métier.

## Revendications

1. Procédé de réalisation de connexions dans un répartiteur téléphonique constitué de colonnes portant des blocs de connecteurs et ayant chacune une cheminée de passage de jarretières et au moins un anneau de caniveau, des anneaux de caniveau des différentes colonnes étant juxtaposés et formant un passage transversal aux colonnes, les connecteurs portés par les colonnes formant deux ensembles, chaque connexion devant être réalisée entre un point de connexion du premier ensemble et un point de connexion du second ensemble, le procédé comprenant :

la détermination de coordonnées d'un premier point d'un premier ensemble de connecteurs et la fixation d'une première extrémité d'une jarretière à ce premier point,

la consultation d'un fichier et la détermination dans cleui-ci, d'après les coordonnées du premier point du premier ensemble de connecteurs et de premières données associées à ce point, d'un sous-ensemble de seconds points non connectés du second ensemble de connecteurs,

la sélection d'un second point du sous-ensemble par détermination du point pour lequel une fonction paramétrique des points du sous-ensemble a une valeur optimale, les paramètres de cette fonction ne dépendant que des caractéristiques de constitution du répartiteur, puis,

lorsque le second point se trouve dans une même colonne que le premier point, la disposition de la jarretière dont la première extrémité a été fixée dans la cheminée de cette même colonne, jusqu'au second point, et la fixation de la seconde extrémité de la jarretière au second point, ou

lorsque le second point se trouve dans une autre colonne que celle du premier point, la disposition de la jarretière dont la première extrémité a été fixée dans la cheminée de la colonne comprenant le premier point, jusqu'à l'anneau de caniveau de cette colonne, la disposition de la jarretière dans des anneaux de caniveau jusqu'à l'anneau de caniveau de la colonne comprenant le second point, la disposition de la jarretière dans la cheminée de cette colonne du second point, et la fixation de la seconde extrémité de la jarretière au second point.

2. Procédé selon la revendication 1, caractérisé en ce que le premier ensemble de connecteurs comprend plusieurs blocs de points de connexion, et le second ensemble de connecteurs comprend plusieurs blocs de points de connexion, et les coordonnées d'un point comprennent l'adresse du bloc correspondant et les coordonnées du point dans le bloc.

3. Procédé selon l'une des revendications 1 et 2, caractérisé en ce que les données associées au premier point sont choisies dans le groupe qui comprend des données de trafic probable assuré par le point considéré, des données représentatives des services particuliers qui doivent être assurés à la ligne téléphonique à connecter, et des données représentatives des caractéristiques particulières de l'autocommutateur associé au répartiteur.

4. Procédé selon l'une quelconque des revendications précédentes, caractérisé en ce que le second ensemble de connecteurs comporte plusieurs blocs de connecteurs, et la fonction paramétrique dépend d'une première fonction qui est optimale lorsque les taux d'occupation des points de connexion des différents blocs de connecteurs d'un même type sont égaux et d'une seconde fonction qui est optimale lorsque la longueur du trajet que doit suivre l'organe de connexion des deux points est minimale.

5. Procédé selon l'une quelconque des revendications précédentes, caractérisé en ce qu'il comprend en outre la remise à jour du fichier par marquage du second point sélectionné afin que celui-ci ne puisse pas être sélectionné à nouveau.

6. Procédé selon l'une quelconque des revendications précédentes, caractérisé en ce qu'il comprend en outre la comparaison de la valeur de la fonction paramétrique à une valeur de référence et, lorsque la fonction présente une relation prédéterminée avec la valeur de référence, la mise en œuvre à nouveau du procédé avec incorporation au sous-ensemble de points déjà connectés afin qu'un second point déjà connecté soit sélectionné, et la mise en œuvre à nouveau du procédé pour le premier point correspondant au second point déjà connecté et sélectionné.

7. Procédé selon l'une quelconque des revendications précédentes, caractérisé en ce qu'il comprend la traduction des coordonnées du premier point de connexion en un numéro d'abonné et inversement, et la traduction des coordonnées du second point de connexion en un numéro d'équipement d'autocommutateur et inversement.

**Claims**

1. Process for providing connections in a distributing frame constituted by columns supporting connector blocks and each having a chimney for receiving jumper leads and at least a foot ring, foot rings of different columns being juxtaposed and forming a passage transverse to the columns, connectors supported by columns forming two sets, each connection being provided between a connection point of the first set and a connection point of the second set, said process including

determining coordinates of a first point of a first set of connectors and attaching a first end of a jumper lead to said first point,

consulting a file and determining in the same, according to said coordinates of said first point of the first set of connectors and to first data related to said point, a sub-set of second points of the second connector set which are unconnected,

selecting a second point of said sub-set by determining the point for which a parametric function of sub-set points has an optimum value, parameters of said function depending only from constitution features of the distributing frame, and then

when the second point is in the same column as the first point, providing the jumper lead, having its first end yet attached, in the chimney of the same column and to the second point, and attaching the second end of the jumper lead to said second point, or

when the second point is in a column different from that of first point, providing the jumper lead, having its first end yet attached, in the chimney of the column including the first point up to the foot ring of this column, providing said jumper lead inside foot rings up to the foot ring of the column including the second point, providing said jumper lead in the chimney of this column of the second point, and attaching second end of said jumper lead to the second point.

2. Process according to claim 1, characterized in that the first connector set includes several connection point blocks, and the second connector set includes several connection point blocks, and coordinates of a point include address of the corresponding block and coordinates of the point in the block.

3. Process according to claim 1 or 2, characterized in that data related to first point are selected in the group including probable traffic data provided by related point, data representative of specific services provided to a telephone line to be connected, and data representative of specific features of the switcher linked to the distributing frame.

4. Process according to anyone of preceding claims, characterized in that the second connector set includes several connector blocks, and the parametric function depends from a first function which is optimum when occupation rates of connection points of the various connector blocks of a same type are equal and from a second function which is optimum when the length of the path to be followed by connection member is minimum.

5. Process according to anyone of preceding claims, characterized in that it further includes updating the file by marking selected second point for inhibiting a new selection of the same.

6. Process according to anyone of preceding claims, characterized in that it further includes comparing parametric function value to a reference value and, when the function exhibits a predetermined relation to reference value, executing once more the process after incorporating yet connected points to the sub-set for selecting a yet connected second point, and executing once more the process for the first point corresponding to the yet connected and selected second point.

7. Process according to anyone of preceding claims, characterized in that it includes translating coordinates of the first connection point into a subscriber number and inversely, and translating coordinates of the second connection point into a switcher equipment number and inversely.

**Patentansprüche**

1. Verfahren zur Herstellung von Verbindungen in einem Fernsprechverteiler, der aus Reihen besteht, die Blöcke von Leitungswählern tragen und jeweils einen Durchtrittskanal für Schaltdrähte sowie wenigstens einen Leitungsring enthalten, wobei die Leitungsringe unterschiedlicher Reihen nebeneinander angeordnet sind und einen quer zu den Reihen verlaufenden Kanal bilden, wobei ferner die von den Reihen getragenen Leitungswähler zwei Gruppen bilden und jede Verbindung zwischen einem Verbindungspunkt der ersten Gruppe und einem Verbindungspunkt der zweiten Gruppe hergestellt werden muß, enthaltend folgende Verfahrensschritte :

es werden die Koordinaten eines ersten Punktes einer ersten Gruppe von Leitungswählern und der Befestigung eines ersten Endes eines Schaltdrahtes an diesem ersten Punkt ermittelt ;

anhand einer Kartei wird nach den Koordinaten des ersten Punktes der ersten Gruppe von Leitungswählern und der mit diesem Punkt verknüpften ersten Daten eine Untergruppe nicht verbundener zweiter Punkte der zweiten Gruppe von Leitungswählern bestimmt ;

es wird ein zweiter Punkt der Untergruppe ausgewählt, in dem der Punkt bestimmt wird, für den eine parametrische Funktion der Punkte der Untergruppe einen optimalen Wert besitzt, wobei die Parameter dieser Funktion nur von Eigenschaften des Aufbaues des Fernsprechverteilers abhängen ;

wenn sich der zweite Punkt in derselben Reihe wie der erste Punkt befindet, erfolgt dann die Anordnung des Schaltdrahtes, dessen erstes Ende in dem Durchtrittskanal derselben Reihe befestigt wurde, zum zweiten Punkt und die Befestigung des zweiten Endes dieses Schaltdrahtes am zweiten Punkt ;

wenn sich dagegen der zweite Punkt in einer anderen Reihe als der erste Punkt befindet, erfolgt die Anordnung des Schaltdrahtes, dessen erstes Ende in dem Durchtrittskanal der den ersten Punkt enthaltenden Reihe befestigt ist, bis zum Leitungsring dieser Reihe, die Anordnung des Schaltdrahtes in den Leitungsringen bis zum Leitungsring der Reihe, die den zweiten Punkt enthält, die Anordnung des Schaltdrahtes im Durchtrittskanal dieser Reihe des zweiten Punktes und die Befestigung des zweiten Endes des Schaltdrahtes an diesem Punkt.

2. Verfahren nach Anspruch 1, dadurch gekennzeichnet, daß die erste Gruppe von Leitungswählern mehrere Blöcke von Verbindungspunkten enthält und daß die zweite Gruppe von Leitungswählern mehrere Blöcke von Verbindungspunkten aufweist, wobei die Koordinaten eines Punktes die Adresse des entsprechenden Blockes und die Koordinaten des Punktes in dem Block enthalten.

3. Verfahren nach einem der Ansprüche 1 und 2, dadurch gekennzeichnet, daß die dem ersten Punkt zugeordneten Daten in der Gruppe gewählt werden, die die Daten des durch den betrachteten Punkt gewährleisteten wahrscheinlichen Verkehrs enthält, ferner die repräsentativen Daten für besondere Dienstleistungen, die von der zu verbindenden Telefonleitung gewährleistet werden und schließlich Daten, die für besondere Eigenschaften des zum Fernsprechverteiler gehörenden Selbstwählers repräsentativ sind.

4. Verfahren nach einem der vorhergehenden Ansprüche, dadurch gekennzeichnet, daß die zweite Gruppe von Leitungswählern mehrere Blöcke von Leitungswählern enthält und daß die parametrische Funktion von einer ersten Funktion abhängt, die optimal ist, wenn die Besetzungsverhältnisse von Verbindungspunkten unterschiedlicher Leitungswählerblöcke derselben Art gleich sind und von einer zweiten Funktion, die optimal ist, wenn die Wegstrecke, der das Verbindungsorgan der beiden Punkte folgen muß, minimal ist.

5. Verfahren nach einem der vorhergehenden Ansprüche, dadurch gekennzeichnet, daß außerdem die Kartei dadurch auf den neuesten Stand gebracht wird, daß der gewählte zweite Punkt markiert wird, so daß er nicht erneut ausgewählt werden kann.

6. Verfahren nach einem der vorhergehenden Ansprüche, dadurch gekennzeichnet, daß außerdem der Wert der parametrischen Funktion mit einem Bezugswert verglichen wird und daß dann, wenn die Funktion eine vorbestimmte Beziehung zu dem Bezugswert besitzt, das Verfahren erneut durchgeführt wird, wobei schon angeschlossene Punkte in die Untergruppe eingefügt werden, damit ein bereits angeschlossener zweiter Punkt ausgewählt wird, und daß das Verfahren erneut für den ersten Punkt entsprechend dem schon angeschlossenen und ausgewählten zweiten Punkt durchgeführt wird.

7. Verfahren nach einem der vorhergehenden Ansprüche, dadurch gekennzeichnet, daß die Koordinaten des ersten Verbindungspunktes in eine Abonenntenziffer verwandelt werden und umgekehrt und daß die Umsetzung der Koordinaten des zweiten Verbindungspunktes in eine Ziffer der Selbstwählanlage durchgeführt wird und umgekehrt.